## Europäisches Patentamt
## European Patent Office
## Office européen des brevets

(11) Veröffentlichungsnummer: **0 024 564**
**A1**

# (12) EUROPÄISCHE PATENTANMELDUNG

(21) Anmeldenummer: **80104494.2**

(22) Anmeldetag: **30.07.80**

(51) Int. Cl.³: **G 05 B 23/02**

(30) Priorität: **16.08.79 DE 2933044**

(43) Veröffentlichungstag der Anmeldung:
**11.03.81 Patentblatt 81/10**

(84) Benannte Vertragsstaaten:
**CH FR GB IT LI**

(71) Anmelder: **DÜRKOPPWERKE GmbH**
**August-Bebel-Strasse 133-145**
**D-4800 Bielefeld 1(DE)**

(72) Erfinder: **Plassmeier, Horst**
**Kantstrasse 9**
**D-4900 Herford(DE)**

(54) **Verfahren zur rechnergestützten Funktionsprüfung der Eingangs- und Ausgangselemente einer Steuerung und Prüfvorrichtung zur Durchführung des Verfahrens.**

(57) Bei dem Verfahren zur rechnergestützten Funktionsprüfung der Eingangselemente (Signalgeber) und der Ausgangselemente (Stellglieder) einer Steuerung wird nach Betätigung eines Schalters für die Programmwahl der funktionsgemäße Betrieb der Steuerung aus- und das Prüfprogramm eingeschaltet. Nach Adresseneingabe in einen mehrstelligen Vorwahlschalter wird -unter Einbeziehung zunächst noch freier, deshalb mit dem Prüfprogramm belegter Speicherplätze des Mikrocomputers - die Einzelanwählbarkeit jedes zur Steuerung gehörenden Eingangs- bzw. Ausgangselementes gewährleistet und somit die Funktionsprüfung besagter Elemente ermöglicht.

Erfindungswesentlich ist, daß besagte Funktionsprüfung bei Nichtauftrennung der Leitungsstränge der vorhandenen Installation der Steuerung und unter Vermeidung zusätzlicher Prüf- und/oder Meßmittel durchgeführt werden kann, ausgenommen diejenigen Mittel, die von vornherein für die funktionsgemäße Verwendung der Steuerung in ihr enthalten sind.

EP 0 024 564 A1

./...

Verfahren zur rechnergestützten Funktionsprüfung der
Eingangs- und Ausgangselemente einer Steuerung und
Prüfvorrichtung zur Durchführung des Verfahrens

Die Erfindung bezieht sich auf ein Verfahren zur rechnergestützten Funktionsprüfung der Eingangselemente
(Signalgeber) und der Ausgangselemente (Stellglieder)
einer Steuerung und auf eine Prüfvorrichtung zur
Durchführung des Verfahrens.

Maschinen mit hohem Mechanisierungs- bzw. Automatisierungsgrad, z.B. automatisierte Nähanlagen, haben
heute sehr aufwendige und komplizierte Steuerungen,
die u.a. aus einer großen Anzahl von Signalgebern
wie kontaktbestückte oder kontaktlose Schalter,
Lichtschranken und einer großen Anzahl von Stellgliedern wie Magnetventile, Stellmagnete, Heizwicklungen
und Motoren bestehen. Der Wert einer Maschine oder
Anlage, die mit einer solchen Steuerung ausgerüstet ist,
hängt u.a. neben der Funktionstüchtigkeit auch von der
Reparaturfreundlichkeit besagter Steuerung ab. Beim
Konzipieren einer fortschrittlichen Schaltung wird neben
der sicheren Erreichung vorgegebener Funktionsabläufe
mehr und mehr der Zweck verfolgt, notwendige Wartungs-
und Servicemaßnahmen zu erleichtern und bei
Funktionsstörungen die Fehlersuche zu vereinfachen.

Es ist allgemein bekannt, die Fehlersuche an Steuerungen oder sonstigen elektrischen Schaltungen durch das Anlegen von Spannungsquellen und von Meßgeräten vorzunehmen, wobei häufig für die Dauer der Prüfung in der Steuerung befindliche Leitungsstränge aufgetrennt werden müssen. Außerdem ist nach der deutschen Auslegeschrift 21 42 860 eine Anlage zur Prüfung der Wagenelektrik durch eine Widerstandsmessung der einzelnen elektrischen Verbraucher bei der Endkontrolle von Kraftfahrzeugen bekannt. Dabei wird in den Stromkreis von der Fahrzeugbatterie zu den einzelnen, nach aufgerufener Prüfvorgabe manuell einzuschaltenden Verbrauchern ein Batterieadapter zugeschaltet. Der auf diese Weise gemessene Strom wird in einem für den Sollwert-Istwert-Vergleich programmierten Digitalrechner im Hinblick auf eine "Fehler-Gut-Aussage" ausgewertet. Diese Prüfmethode hat folgende Nachteile:

1. Die Zuschaltung des Adapters setzt eine Auftrennung des betreffenden Leitungsstranges voraus.

2. Die Prüfmethode setzt zusätzliche, vom Prüfgegenstand unabhängige Meßmittel und Geräte zur Fehleranzeige und Fehlerauswertung voraus.

3. Werden in Gruppen zusammengefaßte Prüfgegenstände geprüft, ist beim Vorliegen eines Fehlers dessen Lokalisierung nicht ohne weiteres möglich.


Der Erfindung liegt die Aufgabe zugrunde, die peripheren, außerhalb des Steuergerätes angeordneten Eingangs- und Ausgangselemente einer Steuerung unter Benutzung der vorhandenen Bauteile dieser Steuerung und deren Installation einzeln anzuwählen und ohne zusätzlichen Aufwand an Meßmitteln und an Installation zu prüfen, wobei keine Eingriffe in die Leitungsführung der Steuerung, z.B. durch das Auftrennen einzelner Leitungsstränge vorgenommen werden.

Erfindungsgemäß wird diese Aufgabe durch die im kennzeichnenden Teil des Anspruches 1 beschriebenen Merkmale gelöst. Schritte zur Durchführung des im Oberbegriff des Anspruches 1 genannten Verfahrens sind in den Unteransprüchen 2 und 3 beschrieben. In den Unteransprüchen 4 bis 7 ist die Prüfvorrichtung zur Durchführung des Verfahrens nach Anspruch 1 beschrieben.

Mit der Erfindung werden folgende Vorteile erzielt:

1. Nach einem vorgegebenen Prüfprogramm ist jedes zur Steuerung der betriebsfertigen Maschine bzw. Anlage gehörende Eingangselement (Signalgeber) und jedes Ausgangselement (Stellglied) einzeln anwählbar. Dadurch wird die Fehlersuche erheblich vereinfacht.

2. Zur Abfrage des Schaltzustandes der Eingangselemente bzw. zur Prüfung der Funktion der Ausgangselemente sind keine zusätzlichen Meßmittel und Anzeigegeräte notwendig. Ebenso sind keine zusätzlich zur vorhandenen Installation der Steuerung anzuschließenden Leitungen notwendig.

3. Wegen der Einzelanwählbarkeit eines Ausgangselementes ist der von ihm verursachte Bewegungsablauf eines zugehörigen Maschinenteiles besser als während des Betriebes (Hauptprogramm) der Maschine zu beobachten. Hiermit bietet sich dieser Prüfvorgang auch als Hilfe bei der Einstellung vorgeschalteter Dämpfungselemente an, z.B. bei der Einstellung eines pneumatischen Drosselventiles.

4. Durch die Einzelanwählbarkeit und Abfragung des Schaltzustandes eines Eingangselementes, z. B. eines kontaktlosen Schalters oder einer Lichtschranke, deren
Schaltpunkte weder sichtbar noch hörbar sind, wird eine
exakte Einstellung solcher Signalgeber ermöglicht.

5. Für die Überprüfung der Steuerung bei Funktionsstörungen sind lediglich Tabellen mit den Adressen
der Eingangs- und Ausgangselemente erforderlich;
nicht aber zusätzliche Prüfmittel wie Meßgeräte, Logiktester, Spannungsquellen, Prüfleitungen u.a..

6. Da die Fehlersuche entsprechend dem erfindungsgemäßen
Prüfverfahren nach vorgegebenem Prüfprogramm
systematisch und gezielt durchgeführt wird, beschränkt
sich die Reparatur auf das Erkennen und Auswechseln
des/der funktionsuntüchtigen Teiles/Teile.

Weitere Einzelheiten der Erfindung werden im folgenden
anhand der Zeichnungen erläutert.

Es zeigen:

Fig. 1  ein Blockschaltbild, aus dem der prinzipielle
Aufbau der Prüfvorrichtung zur Durchführung
des erfindungsgemäßen Verfahrens zur Funktionsprüfung der Eingangs- und Ausgangselemente einer
Steuerung zu ersehen ist.

Fig. 2  ein Flußdiagramm, aus dem die Prüfabläufe des
Verfahrens zur rechnergestützten Funktionsprüfung
der Eingangs- und Ausgangselemente einer
Steuerung zu ersehen sind.

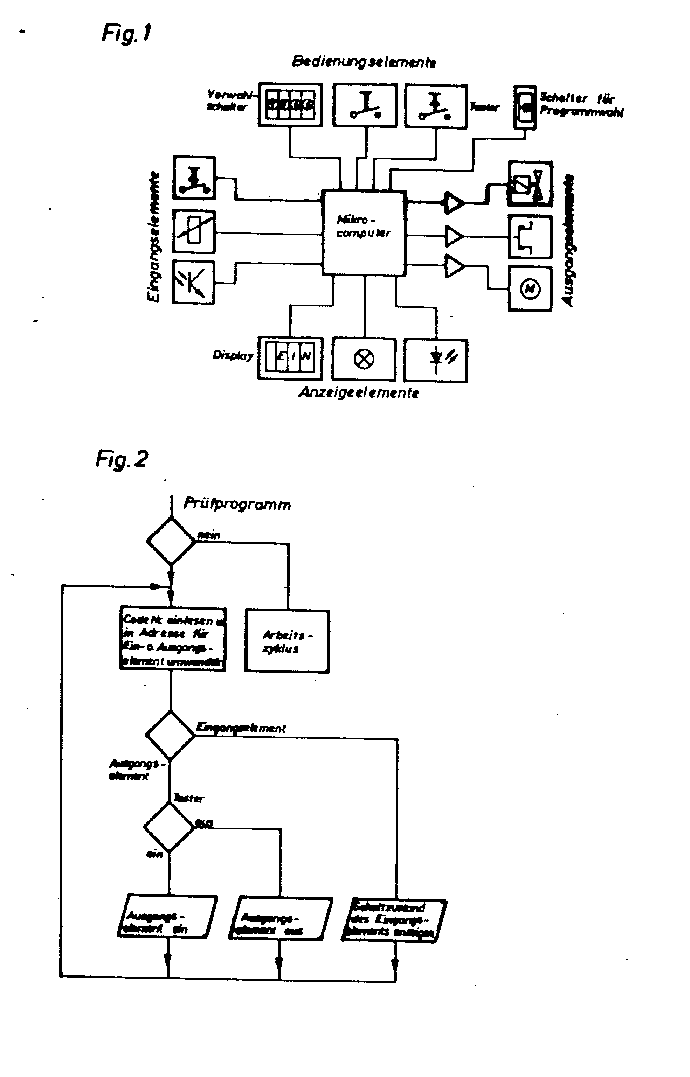

Die Steuerung, deren Eingangs- und Ausgangselemente nach dem erfindungsgemäßen Verfahren geprüft werden, besteht im wesentlichen aus einem Steuergerät, aus Eingangselementen (Signalgeber) und aus Ausgangselementen (Stellglieder). Das Steuergerät enthält vorzugsweise an sichtbarer Stelle, z.B. an seiner Frontplatte, angebrachte Bedienungselemente wie Schalter, Taster und wenigstens einen mehrstelligen Vorwahlschalter zur Adresseneingabe. Außerdem sind vorzugsweise an der Frontplatte des Steuergerätes Anzeigeelemente wie Kontrollampen, Leuchtdioden und wenigstens ein Display angebracht. Diese Elemente werden generell für das Hauptprogramm der Maschine bzw. der Anlage benutzt und erhalten durch das Prüfprogramm eine andere Funktion. Das Steuergerät ist ferner mit einem Schalter für die Programmwahl (Fig. 1) bestückt, der an von außen nicht ohne weiteres zugänglicher Stelle angebracht ist, z.B. auf der Rückseite einer abklappbaren oder abnehmbaren Frontplatte. Als wesentlicher Bestandteil ist das Steuergerät mit wenigstens einem Mikrocomputer bestückt.

Zur Durchführung des erfindungsgemäßen Prüfverfahrens werden noch freie Speicherplätze des Mikrocomputers entsprechend dem vorgegebenen Prüfprogramm belegt, wodurch die für die Durchführung des Prüfverfahrens notwendige Zuordnung der am Steuergerät befindlichen Bedienungselemente zu den außerhalb des Steuergerätes befindlichen Eingangs- und Ausgangselementen einerseits und die Zuordnung besagter Eingangs- und Ausgangselemente zu den am Steuergerät befindlichen Anzeigeelementen andererseits ermöglicht wird.

Der Prüfvorgang (vgl. Fig. 2) wird eingeleitet, nachdem der verdeckt angeordnete Schalter für die Programmwahl (Fig. 1) in eine, dem vorgegebenen Prüfprogramm entsprechende Schaltstellung gebracht wird. Danach wird die, die jeweilige Prüfoperation kennzeichnende Code-Nummer in den mehrstelligen Vorwahlschalter (Fig. 1) eingelesen. Bezieht sich diese Code-Nummer auf ein Eingangselement, so ermöglicht der Mikrocomputer die Anwählung des betreffenden Eingangselementes, wonach dessen Schaltzustand abgefragt und auf dem Display angezeigt wird. Zu den Eingangselementen werden im Sinne des erfindungsgemäßen Prüfverfahrens auch in der Steuerung enthaltene Meßwertaufnehmer gezählt. Unter deren Schaltzustand kann der aufgenommene Meßwert verstanden werden, der nach erfolgter Abfrage auf dem Display angezeigt wird. Bezieht sich die Code-Nummer auf ein Ausgangselement, so ermöglicht der Mikrocomputer dessen Anwählung. Das angewählte Ausgangselement (Stellglied) wird eingeschaltet, wenn sich der Taster (Fig. 1) in der Schaltstellung "Ein" befindet (Fig. 2). Damit wird die Funktion des Stellgliedes geprüft. Außerdem wird der Bewegungsablauf des nachgeschalteten Maschinenteiles kontrolliert.

Zu den Ausgangselementen im Sinne des erfindungsgemäßen Prüfverfahrens werden auch die am Steuergerät befindlichen Anzeigeelemente wie Kontrollampen, Leuchtdioden gezählt. Auch sie können nach dem Einlesen ihrer Code-Nummer und nach dem Betätigen des in Fig. 2 erwähnten Tasters eingeschaltet und somit geprüft werden.

0024564

Das erfindungsgemäße Verfahren zur Prüfung der Eingangs- und Ausgangselemente einer Steuerung wird ausschließlich mit den bereits in der Steuerung enthaltenen Bauteilen und unter Verwendung der Installation dieser Steuerung durchgeführt. Die mögliche Einzelanwählung jedes zu prüfenden Eingangs- bzw. Ausgangselementes vereinfacht die Reparatur- und Wartungsarbeiten an komplizierten Steuerungen, die an der Schnittstelle zwischen der Mechanik, der Pneumatik oder Hydraulik und der Elektrik angesiedelt sind.

DÜRKOPPWERKE
GMBH
BIELEFELD

Aktenzeichen: P 29 33 044. 7-52

Patentansprüche:

1. Verfahren zur rechnergestützten Funktionsprüfung der
   Eingangselemente (Signalgeber) und der Ausgangselemente
   (Stellglieder) einer Steuerung,
   dadurch gekennzeichnet, daß das Prüfprogramm nach
   Betätigung des Schalters für die Programmwahl eingeleitet
   wird, daß die Einzelanwählbarkeit jedes Eingangs- und
   Ausgangselementes nach Adresseneingabe in den
   mehrstelligen Vorwahlschalter unter Einbeziehung
   zunächst noch freier, deshalb mit dem Prüfprogramm
   belegter Speicherplätze des Mikrocomputers vorgenommen
   wird und daß die Funktionsprüfung bei ungetrennten
   Leitungssträngen und unter Vermeidung externer Prüf-
   und/oder Meßmittel durchgeführt wird.

2. Verfahren nach Anspruch 1, dadurch gekennzeichnet,
   daß der Schaltzustand des einzeln angewählten Eingangselementes abgefragt und mit dem am Steuergerät
   befindlichen Anzeigeelement sichtbar gemacht wird.

3. Verfahren nach Anspruch 1, dadurch gekennzeichnet,
   daß die Funktion des einzeln angewählten Ausgangselementes
   nach Betätigung eines Tasters überprüft wird.

0024564

4. Prüfvorrichtung zur Durchführung des Verfahrens nach den vorangegangenen Ansprüchen, dadurch gekennzeichnet, daß die Steuerung aus dem Steuergerät mit peripher zugeordneten Eingangs- und Ausgangselementen besteht, die einzeln anwählbar sind.

5. Prüfvorrichtung nach Anspruch 4, dadurch gekennzeichnet, daß das Steuergerät mit wenigstens einem Mikrocomputer und mit Bedienungs- und Anzeigeelementen bestückt ist.

6. Prüfvorrichtung nach den Ansprüchen 4 und 5, dadurch gekennzeichnet, daß das Steuergerät zwecks Einleitung des Prüfvorganges mit dem Schalter für die Programmwahl und mit dem mehrstelligen Vorwahlschalter bestückt ist, mit dem jedes Eingangs- bzw. Ausgangselement einzeln anwählbar ist.

7. Prüfvorrichtung nach den Ansprüchen 4, 5 und 6, dadurch gekennzeichnet, daß freie Speicherplätze des Mikrocomputers gemäß dem Prüfprogramm belegt werden und daß somit nach Zuordnung des zu prüfenden Eingangs- oder Ausgangselementes zu dem betreffenden Bedienungs- und Anzeigeelement der Prüfvorgang durchführbar ist.

0024564

**Fig.1**

**Fig.2**

Europäisches Patentamt

**EUROPÄISCHER RECHERCHENBERICHT**

EP 80 10 4494

| | | KLASSIFIKATION DER ANMELDUNG (Int. Cl.³) |
|---|---|---|
| **EINSCHLÄGIGE DOKUMENTE** | | |
| Kategorie | Kennzeichnung des Dokuments mit Angabe, soweit erforderlich, der maßgeblichen Teile | betrifft Anspruch | |

| Kategorie | Dokument | betrifft Anspruch | Klassifikation / Sachgebiete |
|---|---|---|---|
| X | IBM TECHNICAL DISCLOSURE BULLETIN, Band 21, Nr. 11, April 1979, New York, US, A. CARUSONE et al.: "Automatic diagnostics in a processor-controlled copier/printer", Seiten 4397-4398<br><br>* Das ganze Dokument *<br>-- | 1,6,7 | **KLASSIFIKATION DER ANMELDUNG (Int. Cl.³)**<br><br>G 05 B 23/02 |
| X | 3RD USA-JAPAN COMPUTER CONFERENCE PROCEEDINGS, 10-12. Oktober 1978, San Francisco, US, K. KURAMOCHI: "A maintenance system for programable logic controllers", Seiten 162-164<br><br>* Seiten 163-164 "Service functions for diagnosing troubles" *<br>-- | 1-4 | **RECHERCHIERTE SACHGEBIETE (Int. Cl.³)**<br><br>G 01 R 31/28<br>G 05 B 19/04<br>G 06 F 11/26<br>G 05 B 23/02 |
| | IBM TECHNICAL DISCLOSURE BULLETIN, Band 16, Nr. 8, Januar 1974, New York, US, D.C. BALLOU: "Diagnostics for a synchronous I/O control unit attached to a microprocessor", Seiten 2742-2743<br><br>* Das ganze Dokument *<br>-- | 1,5 | |
| PEX | FR - A - 2 444 742 (CONSTRUCTIONS ELECTRO-MECANIQUES D'AMIENS)<br><br>* Das ganze Dokument *<br><br>& DE - A - 2 949 934<br>   GB - A - 2 039 677<br>--<br>./. | 1-7 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Grunden angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 08-12-1980 | CORNILLIE |

EPA form 1503.1 06.78

Europäisches Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| PE | DE - B - 2 903 383 (HEWLETT-PACKARD GmbH) <br><br> * Das ganze Dokument * <br><br> ---- | 1,5 | |
| | | | **RECHERCHIERTE SACHGEBIETE (Int. Cl.³)** |